# EUROPÄISCHE PATENTSCHRIFT

(11) **EP 4 371 448 B1**
(45) Veröffentlichungstag und Bekanntmachung des Hinweises auf die Patenterteilung: **11.03.2026**
(21) Anmeldenummer: 22207613.5
(22) Anmeldetag: 15.11.2022
(51) Int. Cl.: A47J 31/54, A47J 31/52, A47J 31/46

(54) **HEISSGETRÄNKEZUBEREITUNGSVORRICHTUNG MIT HEISSWASSERBOILER**
HOT BEVERAGE PREPARATION DEVICE WITH HOT WATER BOILER
DISPOSITIF DE PRÉPARATION DE BOISSONS CHAUDES DOTÉ D'UNE CHAUDIÈRE À EAU CHAUDE

(43) Veröffentlichungstag der Anmeldung: 22.05.2024
(73) Patentinhaber: FRANKE Kaffeemaschinen AG, 4663 Aarburg (CH)
(72) Erfinder: OGGIER, David, 6208 Oberkirch (CH); WÄCHTER, Serge, 4052 Basel (CH)
(74) Vertreter: LBP Lemcke, Brommer & Partner Patentanwälte mbB

(56) Entgegenhaltungen:
- EP-A1- 1 354 543
- EP-B1- 0 676 163
- WO-A1-92/05381
- DE-A1- 102018 007 230
- KR-A- 20110 093 424
- KR-B1- 101 497 080
- US-B1- 6 612 268
- US-B2- 9 877 608
- KAFFEEMACHER: "La Marzocco LINEA MICRA im Test: Neuer Dualboiler-Meilenstein!", 12 November 2022 (2022-11-12), XP093040977, Retrieved from the Internet <URL:https://www.youtube.com/watch?v=GWt0Cf6j3hE> [retrieved on 20230421]

## Beschreibung

Die vorliegende Erfindung betrifft eine Heißgetränkezubereitungsvorrichtung, insbesondere eine Kaffeemaschine, mit einem Heißwasserboiler zum Erhitzen und Speichern von heißem Wasser oder Heißdampf zur Zubereitung von Heißgetränken, wobei der Heißwasserboiler einen Kaltwasserzulauf, ein Speichergefäß mit einer Heizung und einen Heißwasser- oder Dampfauslass aufweist.

In Kaffeeautomaten werden zur Speicherung von zur Getränkezubereitung erforderlichem Heißwasser häufig Boiler eingesetzt, welche Heißwasser im Temperaturbereich von unter hundert Grad, typischerweise um etwa 90°C speichern. Häufig werden sogar getrennte Boiler für Heißwasser und Dampf vorgesehen. Die bei der Heißwassererzeugung zwangsweise anfallende Abwärme der Boiler muss abgeführt werden, damit das Gerät im Inneren nicht zu warm wird. Zu hohe Temperaturen in dem Inneren eines Kaffeeautomaten können zum temporären Ausfall von Komponenten, zu langfristigen Defekten durch vorzeitige Alterung und zu schwankender Produktqualität führen. Insbesondere bei sehr kompakt gebauten Geräten kann es zu thermischen Problemen kommen, wenn nicht genügend Platz vorhanden ist, die anfallende Abwärme an die Geräteaußenseite abzuführen. Häufig müssen Kaffeeautomaten mittels Lüftern aktiv gekühlt werden, um die Abwärme bei der Heizwasserbereitung abzuführen.

Die KR 2011 0093424 A beschreibt ein Kalt- und Heißwasserreinigungssystem mit einem Heißwassertank, der eine innere und äußere Wand aufweist, zwischen denen entweder ein Wärmedämmmaterial oder ein Vakuum zur Minimierung des Heizenergieverbrauchs eingebracht ist.

US 6 612 268 B1 offenbart ein Heißwassergerät mit einem zylindrischen Heißwasserbehälter, der von einer Vakuum-Isolierhülle umgeben ist, um die Wärmeverluste zu minimieren. Der Behälter ist so konzipiert, dass er bei Temperaturen über 100°C betrieben wird und eine Mischvorrichtung enthält, die heißes Wasser mit kaltem Wasser mischt, um die gewünschte Temperatur zu erreichen.

In dem bei Youtube verfügbaren Video von Kaffeemacher: "La Marzocco LINEA MICRA im Test: Neuer Dualboiler-Meilenstein!" vom 12. November 2022 wird die Siebträgermaschine La Marzocco LINEA MICRA präsentiert, die über einen Heißwasserboiler und einen separaten Dampfboiler verfügt.

KR 101 497 080 B1 beschreibt einen Vakuum-Wärmespeicher-Wassertank, bei dem eine Vakuumschicht zwischen einem inneren und äußeren Rohr gebildet wird, um die Wärmedämmung zu verbessern. Die Konstruktion umfasst eine spezielle Schweißtechnik, um die Vakuumschicht zu versiegeln und die Qualität des gespeicherten Wassers zu erhalten.

EP 0 676 163 B1 beschreibt eine Kaffeemaschine, die über eine kombinierte Düse sowohl für Dampf als auch für heißes Wasser verfügt, wobei ein Umschaltventil den Fluss von Dampf oder heißem Wasser steuert. Die Maschine enthält separate Kessel für Dampf und heißes Wasser, was eine gleichzeitige Ausgabe von Kaffee und Dampf oder heißem Wasser ermöglicht.

WO 92/05381 A1 offenbart eine thermische Isolierjacke, die aus zwei halb-zylindrischen Schalen besteht, die eine Isolationskammer umschließen, in der sich ein Isoliermaterial befindet. Diese Konstruktion zielt darauf ab, thermische Verluste zu minimieren und wird in Anwendungen verwendet, die eine effektive Isolation erfordern, wie bei heißen Wasserleitungen oder ähnlichen Anwendungen.

WO 92/05381 A beschreibt ein Gerät zur Ausgabe von Getränken, das mindestens eine Brühgruppe und Heizmittel umfasst, um Brühwasser zu erhitzen, wobei das Gerät über Ventile zur Steuerung des Mischverhältnisses von heißem und kaltem Wasser verfügt. Die Steuerlogik ermöglicht eine präzise Temperaturregelung während des Brühvorgangs, um die Qualität der zubereiteten Getränke sicherzustellen und Anpassungen an unterschiedliche Bedingungen vorzunehmen.

EP 1 354 543 A1 beschreibt ein Gerät zur Erzeugung von heißem Wasser, insbesondere für Heißgetränkeautomaten, das einen Kessel mit Heizeinrichtungen umfasst. Der Kessel ist mit einer Kaltwasserzufuhr verbunden, und es gibt Mischvorrichtungen, die kaltes und heißes Wasser mischen, um die Ausgabe auf die gewünschte Temperatur des Getränks anzupassen. Die Menge des zugeführten kalten Wassers wird entsprechend dem zu bereitenden Heißgetränk angepasst.

DE 10 2018 007230 A1 beschreibt ein Verfahren für eine automatische Getränkeausgabevorrichtung, die heißes Wasser mit variabler Ausgabetemperatur bereitstellt. Das Gerät nutzt ein elektrisch betriebenes 3/2-Wege-Ventil, das durch eine Abfolge elektrischer Impulse gesteuert wird, um die Mischung von heißem und kaltem Wasser zu regeln und so die gewünschte Ausgabetemperatur zu erreichen. Dies ermöglicht eine präzise Temperatureinstellung bei gleichzeitiger Reduzierung der Produktionskosten.

Es ist daher eine Aufgabe der vorliegenden Erfindung, eine Heißgetränkezubereitungsvorrichtung anzugeben, welche im Hinblick auf das Temperaturmanagement verbessert ist und einen sehr kompakten Aufbau ermöglicht.

Die Aufgabe wird gelöst durch die Merkmale des Anspruchs 1. Vorteilhafte Ausgestaltungen sind den abhängigen Ansprüchen zu entnehmen.

Bei einer Heißgetränkezubereitungsvorrichtung der eingangs genannten Art ist erfindungsgemäß vorgesehen, dass das Speichergefäß zumindest teilweise mit einer Vakuumisolierung versehen oder umgeben ist.

Durch den Einsatz einer Vakuumisolation kann der Wärmeverlust des Heißwasserboilers im Vergleich zu normal isolierten Boilern signifikant gesenkt werden. Die geringe Abwärme wirkt sich positiv auf die Qualität, Haltbarkeit und das Mahlverhalten frischer Kaffeebohnen aus, welche typischerweise zuoberst auf dem Gerät gelagert werden, somit besonders der aufsteigenden Abwärme ausgesetzt sind. Durch die verringerte Abwärme kann auf eine aktive Kühlung beziehungsweise Belüftung des Geräts verzichtet werden oder die Kühlleistung zumindest deutlich reduziert werden. Durch die geringere Abwärme des vakuumisolierten Heißwasserboilers wird der Energieverbrauch des Geräts gesenkt und somit die Energieeffizienz verbessert sowie Betriebskosten und CO₂-Emissionen gesenkt.

Erfindungsgemäß besitzt die Heißgetränkezubereitungsvorrichtung eine programmtechnisch eingerichteten Steuerung, welche zur Überwachung und/oder Regelung der Heißwasser- oder Dampftemperatur mit einem innerhalb des Heißwasserboilers angeordneten Temperatursensor verbunden ist, und die Steuerung eingerichtet ist, nach Abschalten der Heizung eine Abkühlzeit zu erfassen und bei unterschreiten eines Schwellenwerts eine Fehlermeldung zu erzeugen, die auf eine defekte Vakuumisolierung hinweist. Somit kann auf einfache Weise die Vakuumisolation beurteilt und festgestellt werden, ob ein defekt des Vakuums vorliegt.

Im einfachsten Fall kann einfach die Außenwand des Speichergefäßes des Boilers zumindest bereichsweise doppelwandig ausgeführt werden, so dass der doppelwandige Bereich der Außenwand einen evakuierten Raum einschließt. Der Boiler ist somit kompakt ausgeführt und weist eine geringe Abwärme auf.

Alternativ kann zur Vakuumisolierung das Speichergefäß in eine zumindest bereichsweise doppelwandige Außenhülle eingesetzt werden, deren doppelwandiger Bereich einen evakuierten Raum einschließt. Somit kann ein herkömmlicher Boiler verwendet werden, der zur Reparatur oder zum Austausch im Falle eines Defekts aus der vakuumisolierenden Außenhülle ausgebaut und ersetzt werden kann.

In beiden Fällen ist es möglich, das doppelwandige Speichergefäß oder die doppelwandige Außenhülle mit einem nicht-vakuumisolierten Deckel zu versehen, durch welchen elektrische und/oder hydraulische Anschlüsse des Boilers geführt sind. Somit können auf einfache Weise Durchführungen realisiert werden, ohne aufwändig die Vakuumhülle durchdringen zu müssen. Der nicht-vakuumisolierte Deckel kann beispielsweise in herkömmlicherweise mit einer thermischen Isolierung aus Dämmstoff versehen sein.

Als Heißwasserboiler wird im Rahmen der Erfindung auch ein Boiler zur Bereitstellung und Speicherung von Dampf angesehen, der im Normalbetrieb ein unter Druck stehendes Dampfvolumen und ein unter den herrschenden Temperatur- und Druckbedingungen noch nicht verdampftes Heißwasservolumen enthält. Ein Heißwasserboiler im Rahmen der Erfindung kann auch zur gleichzeitigen Bereitstellung von Heißwasser und Dampf dienen und mit sowohl einem Heißwasserals auch einem Dampfauslass versehen sein.

Bei einer bevorzugten Weiterbildung der Erfindung ist vorgesehen, dass das Heißwasser mit einer Temperatur von über 100°C gespeichert und bei der Getränkezubereitung durch Kaltwasserbeimischung auf eine Zubereitungstemperatur von unter 100°C gebracht wird. Hierzu ist das Speichergefäß des Heißwasserboilers als Druckgefäß ausgeführt, in welchem das Heißwasser im Betrieb bei einer Temperatur von über 100°C gespeichert ist und der Heißwasserauslass ist mit einem Dosierventil zur dosierten Kaltwasserbeimischung verbunden, um dem Heißwasser bei der Ausgabe Kaltwasser beizumischen, so dass ein Mischwasser mit einer Temperatur von unter 100°C zur Getränkezubereitung ausgegeben wird.

Die Speicherung von Heißwasser unter Druck bei über 100°C und Kaltwasserzumischung bei der Entnahme sind grundsätzlich unabhängig von der Verwendung eines vakuumisolierten Boilers und stellen einen eigenständigen erfinderischen Beitrag dar. Auch wenn die Verwendung eines vakuumsiolierten Boilers aufgrund der höheren Speichertemperatur hierbei besondere Vorteile mit sich bringt, kann grundsätzlich auch ein normaler, herkömmlich isolierter Heißwasserboiler zum Einsatz kommen.

Durch die Kaltwasserbeimischung wird die Menge des für Getränkezubereitung zur Verfügung stehenden Heißwassers erhöht beziehungsweise kann der Boiler bei gleicher für die Getränkezubereitung zur Verfügung stehender Heißwassermenge kompakter gebaut werden. Durch die höhere Speichertemperatur erhöht sich die Abwärme herkömmlicher Heißwasserboiler signifikant. Die erfindungsgemäße Vakuumisolierung reduziert die Abwärme jedoch erheblich, sodass trotz höherer Speichertemperatur das Gerät kompakt gebaut werden kann und die zulässige Betriebstemperatur im Inneren des Gerätes nicht überschritten wird.

Die Speichertemperatur kann hierbei oberhalb von 110°C, vorzugsweise in einem Bereich von 110°C bis 180°C, weiter vorzugsweise im Bereich von 120°C bis 140°C gewählt werden.

Weiter ist bevorzugt, dass die Kaltwasserbeimischung geregelt erfolgt, indem das Dosierventil zur Kaltwasserbeimischung als regelbares Ventil, insbesondere Proportionalventil, ausgeführt ist und die Getränkezubereitungsvorrichtung einen Temperaturfühler zur Bestimmung der Mischwassertemperatur und ein Steuergerät zur Regelung der Mischwassertemperatur durch Ansteuerung des Dosierventils aufweist. Somit kann die Ausgabetemperatur des Heißwassers je nach gewünschtem Getränk auf unterschiedliche Werte geregelt werden. Beispielsweise kann für Espressokaffee weniger Kaltwasser und für Teewasser zur Zubereitung von grünem Tee mehr Kaltwasser beigemischt werden.

Zwischen dem Dosierventil und dem Temperaturfühler kann ein statischer Mischer, insbesondere Wendelmischer zur Mischung der Kalt- und Heißwasserströme angeordnet sein. Dieser gewährleistet eine schnelle und gründliche Vermischung der Wasserströme. Die sie nach der Mischung einstellende Mischwassertemperatur als Regelgröße kann somit direkt dahinter gemessen werden. Dies ermöglicht einen besonders kompakten Aufbau.

Zweckmäßigerweise kann die Heizung des Boilers als innerhalb des Speichergefäßes angeordnete Heizwendel ausgebildet sein. Dies führt zu einem besonders kompakten Aufbau des Boilers. Insbesondere kann vorgesehen sein, dass die Heizung als gewendelter Rohrheizer ausgebildet ist, indem der Heizwendel innerhalb einer gewendelten Heizröhre läuft, welche vorzugsweise mit Magnesiumoxidpulver zur elektrischen Isolation der Heizwendel befüllt ist.

Es liegt im Rahmen der Erfindung, nicht nur einen vakuumisolierten Heißwasserboiler vorzusehen, sondern mehrere Heißwasserboiler, von denen beispielsweise einer zur Dampferzeugung und ein weiterer zur Heißwassererzeugung vorgesehen und beide jeweils mit einer Vakuumisolierung versehen oder umgeben sind. Auch der Einsatz von mehr als zwei Heißwasserboilern, beispielsweise um einen Parallelbezug von zwei Getränken zu ermöglichen, kann vorgesehen sein.

Weitere Vorteile und Ausgestaltungen der Erfindung ergeben sich anhand der nachfolgenden Beschreibung von Ausführungsbeispielen anhand der Figuren.

Es zeigt:
- Figur 1: ein erstes Ausführungsbeispiel eines vakuumisolierten Heißwasserboilers,
- Figur 2: ein Ausführungsbeispiel eines in eine vakuumisolierte Außenhülle eingesetzten Heißwasserboilers,
- Figur 3: ein Wasserlaufschema einer Heißgetränkezubereitungsvorrichtung mit zwei vakuumisolierten Heißwasserboilern, je einer zur Bereitstellung von Heisswasser und einer zur Bereitstellung von Dampf,
- Figur 4: den zeitlichen Verlauf der Heißwassertemperatur innerhalb des Heißwasserboilers in einem Diagramm, welches die Erfassung der Abkühlkurve zur Beurteilung der Qualität der Vakuumisolierung veranschaulicht und
- Figur 5: ein Wasserlaufschema einer Heißgetränkezubereitungsvorrichtung in einem weiteren Ausführungsbeispiel, bei dem zusätzlich ein statischer Mischer zur Mischung von über ein Mischventil zugeführtem Kaltwasser mit aus dem Heißwasserboiler entnommenen Heißwasser vorgesehen ist.

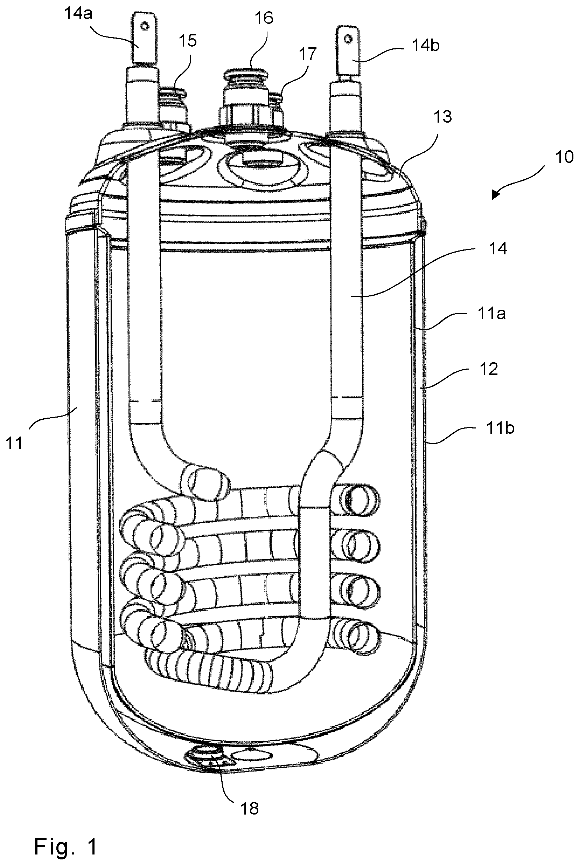

Ein Heißwasserboiler 10, der erfindungsgemäß in einer Heißgetränkezubereitungsvorrichtung, wie etwa einer Kaffeemaschine zum Einsatz kommt, ist in Figur 1 in einem Schnitt dargestellt. Der Heißwasserboiler 10 umfasst ein Speichergefäß 11, welches im unteren Bereich doppelwandig ausgeführt ist und eine innere Außenwand 11a und eine äußere Außenwand 11b aufweist. Dazwischen befindet sich ein Spaltraum 12, welcher evakuiert ist, so dass die Außenwand 11a, 11b eine Vakuumisolierung aufweist. Im oberen Bereich ist der Heißwasserboiler 10 mit einem nur einwandig ausgeführten Deckel 13 versehen, durch den elektrische und hydraulische Durchführungen verlaufen. Im Inneren des Speichergefäßes 10 befindet sich ein gewendelter Rohrheizkörper 14. Dieser besitzt zwei elektrische Anschlüsse 14a, 14b, die durch entsprechende Durchführungen im Deckel 13 nach außen geführt sind. Außerdem hat der Heißwasserboiler mehrere freie Durchführungen 15, 16, 17. Durch diese können Zu- und Ableitungen, sowie Messgeräte wie etwa ein Manometer oder ein Thermometer angeschlossen werden. Im unteren Bereich befindet sich ein Evakuierventil 18, über welches der Spaltraum 12 zwischen der inneren und der äußeren Außenwand 11a, 11b evakuiert wurde.

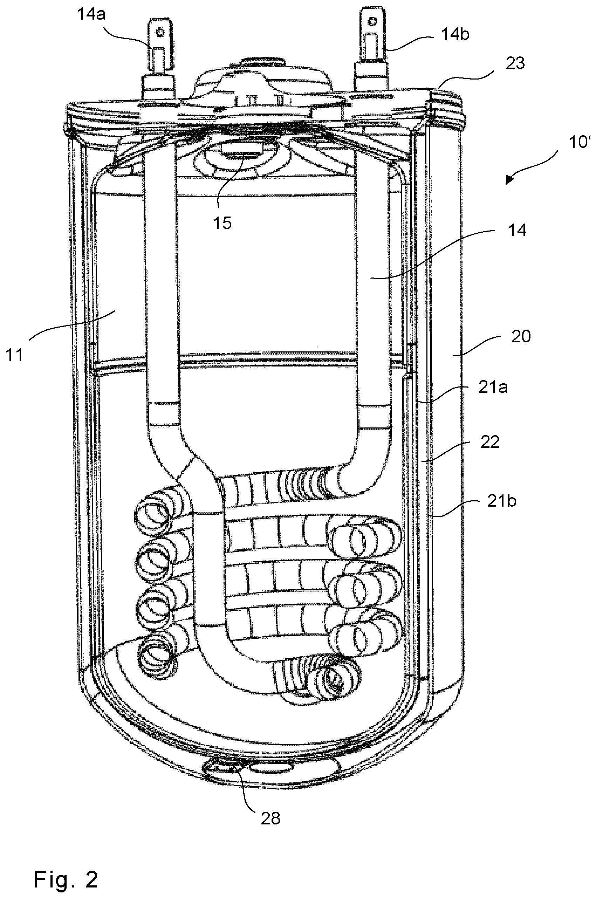

In Figur 2 ist ebenfalls in einer teilgeschnittenen Ansicht ein zweites Ausführungsbeispiel für einen vakuumisolierten Heißwasserboiler 10 dargestellt. Der Heißwasserboiler 10 umfasst hierbei ein Speichergefäß 11', welches in herkömmlicher Weise einwandig ausgeführt ist. In dem Speichergefäß ist ein gewendelter Rohrheizkörper 14 angeordnet, der zwei elektrische Anschlüsse 14a, 14b aufweiset, die durch im oberen Bereich des Speichergefäßes 11' angeordnete Durchführung nach außen geführt sind. Weitere Durchführungen, von denen in Figur 2 nur eine Durchführung 15 sichtbar ist, dienen zum Anschluss von Zu- und Ableitungen, sowie gegebenenfalls Messinstrumenten.

Das Speichergefäß 11' befindet sich innerhalb einer vakuumisolierten Außenhülle 20, deren unterer Bereich doppelwandig mit einer inneren Außenwand 21a und einer äußeren Außenwand 21b ausgeführt ist. Dazwischen befindet sich ein Spaltraum 22, der über ein Evakuierventil 28 evakuiert wurde. Im oberen Bereich ist die Außenhülle 20 mit Hilfe eines nicht-vakuumisolierten Deckels 23 verschlossen, durch welchen die elektrischen und hydraulischen Durchführungen verlaufen. Der Deckel 23 kann in herkömmlicher Weise mit Dämmstoff (z.B. Nadelfilz aus synthetischen Fasern, Silikonschaum, Glaswolle, oder dergleichen) gedämmt sein. Der Deckel 23 kann zur Montage oder Demontage des Wasserboilers 10 oder zu dessen Reparatur geöffnet werden, so dass der Heißwasserboiler 10 ohne die vakuumisolierte Außenhülle 20 gewartet und ersetzt werden kann.

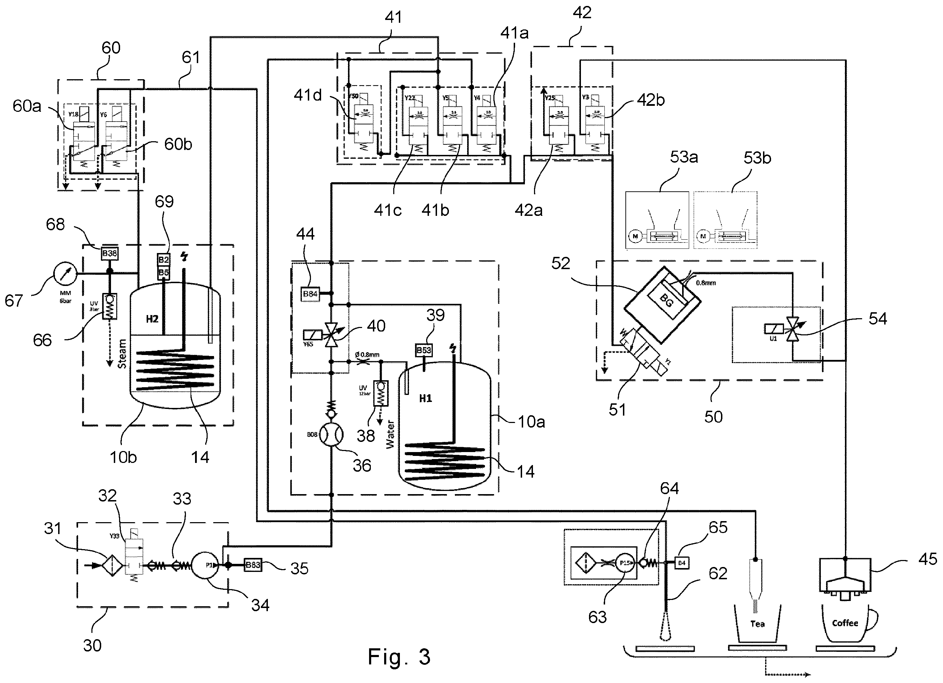

In Figur 3 ist ein sogenanntes Wasserlaufschema einer erfindungsgemäßen Kaffeemaschine mit zwei Heißwasserboilern 10a, 10b gezeigt, welche beide in erfindungsgemäßer Weise mit einer Vakuumisolierung, wie zuvor erläutert, versehen oder umgeben sind. Der Heißwasserboiler 10a dient zur Zubereitung und Speicherung von Heißwasser zur Getränkezubereitung und der Heißwasserboiler 10b dient zur Zubereitung und Speicherung von Dampf zum Aufschäumen von Milch und enthält ein Wasservolumen und ein Dampfvolumen, die in thermischem Gleichgewicht stehen.

An einem Wasserzulauf, der eingangsseitig mit dem Anschluss einer Wasserversorgung oder einem Wasserbehälter verbunden wird, befindet sich eine Baugruppe 30 mit einem Wasserfilter 31, einem Absperrventil 32, zwei hintereinander geschalteten Rückschlagventilen 33, einer Wasserpumpe 34 und einem Temperatursensor 35. Von der Wasserpumpe 34 gelangt kaltes Wasser über einen Durchflussmesser 36 und ein weiteres Rückschlagventil 37 zum Zulauf des Boilers 10a. In dem Heißwasserboiler 10a wird das Wasser auf eine Speichertemperatur von 120°C bis 140°C erhitzt. Über einen Temperatursensor 39 kann die Temperatur im Heißwasserboiler 10a bestimmt und durch Ansteuerung der Heizung 14 des Heißwasserboilers 10a geregelt werden. Ein Überdruckventil 38 am Zulauf des Boilers leitet Wasser im Falle eines Überdrucks aus dem Heißwasserboiler 10a zu einem Ablauf. Der Heißwasserauslauf des Boilers 10a führt zu zwei Ventilblöcken 41, 42. Zwischen Zulauf und Auslauf des Heißwasserboilers 10a befindet sich ein Proportionalventil 40, mit dem Heißwasser aus dem Heißwasserboiler 10a Kaltwasser beigemischt werden kann. Über einen Temperatursensor 44 kann die Wassertemperatur des Mischwassers gemessen und durch entsprechende Ansteuerung des Proportionalventils 40 eingestellt werden.

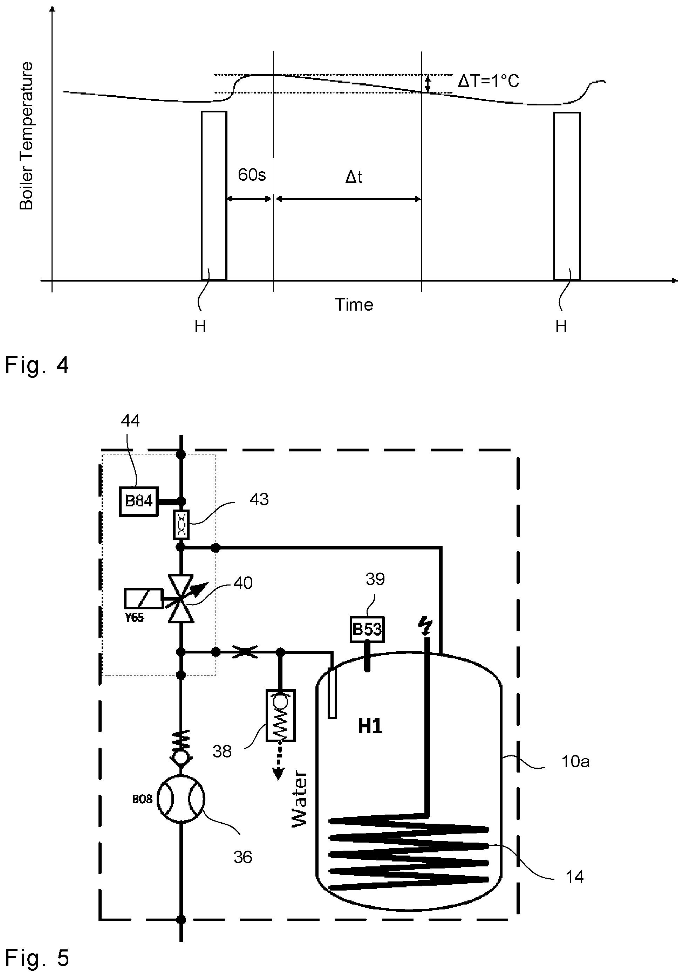

Eine Vermischung des Heißwassers und des über das Proportionalventils 40 zugeführten Kaltwassers kann in der Schlauchleitung hinter der Zusammenführung von Kalt- und Heißwasser erfolgen. Um eine möglichst schnelle Vermischung der beiden Wasserströme zu erreichen kann zusätzlich ein statischer Mischer 43, etwa ein Wendelmischer angeordnet sein, der die beiden Wasserströme gründlich vermischt. Dies ist schematisch in Figur 5 gezeigt. Ein Wendelmischer ist ein statischer Mischer, bei dem in ein rohrförmiges Gehäuse mehrere hintereinander angeordnete, gegeneinander jeweils um 90° versetzte 180°-Wendel angeordnet sind. Außerdem haben die aufeinanderfolgenden Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine Durchmischung des Flüssigkeitsstroms.

Der Heißwasserauslauf des Heißwasserboilers 10a ist mit den beiden Ventilblöcken 41, 42 verbunden. Über das Ventil 41a kann Heißwasser zur Teebereitung ausgegeben werden und das Ventil 41b kann der Heißwasserboiler 10b für die Dampfzubereitung gefüllt werden. Das Ventil 41c ist im Ausführungsbeispiel nicht belegt und steht für weitere optionale Funktionen zur Verfügung. Der Eingang des Ventils 41d ist mit Ausgang des Ventils 41b verbunden und führt ebenfalls zum Heißwasserauslass, sodass Heißwasser und Dampf gleichzeitig ausgegeben werden können. Über das Ventil 42a kann am Getränkeauslasskopf 45 Heißwasser ausgegeben werden, welches beispielsweise für Instantgetränke oder zur Beimischung von Kaffeegetränken verwendet werden kann. Außerdem kann über das Ventil 42a die Auslassleitung von der Brühgruppe 52 zum Auslaufkopf 45 gespült werden. Das Ventil 42b ist im Ausführungsbeispiel nicht belegt und kann zum Beispiel für die Option "Instantgetränke" verwendet werden. Vom Heißwasserauslauf des Heißwasserboilers 10a führt außerdem eine Leitung zum Brühventil 51 in der Brüheinheit 50. Die Brüheinheit 50 umfasst eine Brühgruppe 52 mit einem beweglichen Brühkolben, der eine zylindrische Brühkammer verschließt. Diese kann über zwei separate Mahlwerke 53a, 53b für unterschiedliche Kaffeesorten automatisiert mit frisch gemahlenem Kaffeepulver befüllt werden. Bei geöffnetem Brühventil 51 kann Heißwasser aus dem Heißwasserboiler 10a unter Druck der Wasserpumpe 34 durch die Brühgruppe 52 fließen. Am Ausgang der Brühgruppe 52 befindet sich ein regelbares Gegendruckventil 54, über welches die Durchflussgeschwindigkeit des frisch gebrühten Kaffeegetränks geregelt werden kann. Von dort fließt der frisch gebrühte Kaffee zum Auslasskopf 45 der Kaffeemaschine.

Über den Heißwasserboiler 10b wird Dampf zum Erhitzen und ggf. Aufschäumen von Milch bereitgestellt. Über ein Ventilblock 60 mit zwei parallel geschalteten Ventilen 60a, 60b kann eine Dampfleitung 61 freigegeben werden, die zu einer Dampflanze 62 führt. Über eine Luftpumpe 63 und ein Rückschlagventil 64 kann dem Dampf bei der Ausgabe Luft zum Aufschäumen der Milch beigefügt werden. Außerdem kann an der Dampflanze 62 ein Temperatursensor 65 vorgesehen sein, der die Temperatur der mittels Dampf erwärmten oder aufgeschäumten Milch misst.

Am Dampfauslass des Heißwasserboilers 10b befindet sich außerdem ein Überdruckventil 66, ein Manometer 67 und ein Temperatursensor 68. Die Temperatur im Inneren des Heißwasserboilers 10b kann über Temperatursensoren 69 überwacht werden und durch entsprechende Ansteuerung der Heizung 14 eingestellt werden.

Durch die erfindungsgemäße Vakuumisolierung der Heißwasserboiler 10a, 10b wird eine signifikante Reduktion der Heizungsabwärme erreicht, sodass das Gerät sehr kompakt aufgebaut werden kann, ohne dass es hierbei zu thermischen Problemen kommt. Außerdem ermöglicht die Vakuumisolierung, das Heißwasser bei höheren Speichertemperaturen vorzuhalten, sodass durch Kaltwasserbeimischung bei der Ausgabe ein größeres Wasservolumen zur Verfügung steht. Somit kann entweder der Heißwasserboiler 10a kompakter ausgeführt oder eine größere Menge von Heißgetränken zubereitet werden, bevor wieder Heißwasser nachgeheizt werden muss.

Das Vakuum in dem doppelwandigen Bereich der Vakuumisolierung beträgt typischerweise unter einem Millibar, vorzugsweise sogar unter einem Mikrobar und weiter bevorzugt sogar unter 0,1 µbar. Zusätzlich kann, um die Langzeitstabilität des Vakuums zu erhalten, ein sogenanntes Gettermaterial im Vakuum eingebracht werden, um Gase bei minimalen Undichtigkeiten und beim Ausgasen von Materialien zu absorbieren. Ein Getter bzw. Fangstoff, ist ein chemisch reaktives Material, das dazu dient, ein Vakuum möglichst lange zu erhalten. An der Oberfläche eines Getters gehen Gasmoleküle mit den Atomen des Gettermaterials eine chemische Verbindung ein (Oxidation), oder die Gasmoleküle werden durch Sorption festgehalten. Auf diese Weise werden Gasmoleküle "eingefangen". Als Getter eignen sich Metalle wie Barium-, Aluminium- oder Magnesiumlegierungen, die nach dem Abpumpen ggf. erhitzt werden können, um das Gettermetall zu verdampfen.

In den evakuierten Spaltraum 12, 22 können zusätzlich Reflexionsfolien eingebracht sein, welche die Abwärme der Heißwasserboiler 10, 10' weiter reduzieren.

Die Vakuumisolierung kann, wie bereits erläutert, Teil des Heißwasserboilers sein und mit diesem mechanisch verbunden beziehungsweise eine Einheit bilden oder die Vakuumisolierung kann als separates Bauteil ausgeführt und der Heißwasserboiler darin eingefasst werden.

Die Erfassung einer Abkühlkurve, die zur Beurteilung der Qualität der Vakuumisolierung herangezogen werden kann, ist in dem in Figur 4 dargestellten Diagramm veranschaulicht, welches den zeitlichen Verlauf der Heißwassertemperatur innerhalb des Heißwasserboilers zeigt.

Hierzu ist mittels einer Steuerung, welche auch gleichzeitig zur Ansteuerung der Heizung 14 und Regelung der Heißwassertemperatur im Heißwasserboiler 10, 10' dienen kann, eine zusätzliche Softwarefunktion implementiert, welche anhand der Auskühlkurve des Heißwasserboiler 10, 10', die mit Hilfe des Temperaturfühlers 39, 69 gemessen werden kann, die Isolationsgüte ermittelt. Dadurch kann die Vakuumisolation geprüft werden. Wenn eine zu schnelle Abkühlung festgestellt wird, kann geschlussfolgert werden, dass das Vakuum der Vakuumisolation schadhaft ist und eine entsprechende Fehlermeldung erzeugt werden, die Vakuumisolation auszutauschen oder instand zu setzen. Diese Information kann sowohl am Gerät selbst als auch via Fernwartung abgefragt werden.

In Figur 4 ist die von dem Temperatursensor 39 bzw. 69 des Heißwasserboilers 10b bzw. 10b gemessene Temperaturkurve über die Zeit t aufgetragen. Nach Ausschalten der Heizung sinkt die Temperatur langsam bis auf eine untere Regelschwelle. Ist diese erreicht, so wird die Heizung 14 für eine Heizperiode H angeschaltet. Die Temperatur steigt somit wieder bis auf eine obere Regelschwelle bzw. auf die Solltemperatur im Boiler. Nun wird eine vorgegebene Zeitspanne von hier 60 sec gewartet, bis die Heizung 14 die gesamte Heizenergie an das Heißwasser abgegeben hat. Nun wird die Zeitspanne Δt gemessen, innerhalb der die Temperatur um eine vorgegebene Temperaturdifferenz ΔT von im Ausführungsbeispiel 1°C gesunken ist. Diese Abkühlzeit ist ein Maß dafür, wie gut die Isolationseigenschaft der Vakuumisolation ist. Sinkt die 1° Abkühlzeit unter einen Mindestwert für eine intakte Vakuumisolierung, so wird eine Fehlermeldung erzeugt und per Datenverbindung an eine Überwachungszentrale gemeldet, dass die Vakuumisolierung des Boilers 10a bzw. 10b mutmaßlich defekt ist und überprüft werden muss. Somit kann auf einfache Weise die Vakuumisolation beurteilt und festgestellt werden, ob ein defekt des Vakuums vorliegt. Selbstverständlich kann als Abkühlzeit z.B. auch die Zeitspanne zwischen zwei Heizperioden H erfasst werden, also die Zeit bis die Temperatur auf die untere Regelschwelle abgesunken ist und die Heizung 14 wieder aktiviert wird.

## Patentansprüche

1. Heißgetränkezubereitungsvorrichtung mit mindestens einem Heißwasserboiler (10, 10a, 10b) zum Erhitzen und Speichern von heißem Wasser und/oder Heißdampf zur Zubereitung von Heißgetränken, wobei der Heißwasserboiler (10, 10a, 10b) einen Kaltwasserzulauf, ein Speichergefäß (11, 11') mit einer Heizung (14) und einen Heißwasser- und/oder Dampfauslass aufweist, wobei das Speichergefäß (11, 11') zumindest teilweise mit einer Vakuumisolierung (12, 22) versehen oder umgeben ist,
wobei
die Heißgetränkezubereitungsvorrichtung eine programmtechnisch eingerichteten Steuerung aufweist, welche zur Überwachung und/oder Regelung der Heißwasser- oder Dampftemperatur mit einem innerhalb des Heißwasserboilers (10, 10', 10a, 10b) angeordneten Temperatursensor (39, 69) verbunden ist, **dadurch gekennzeichnet, dass**
die Steuerung eingerichtet ist, nach Abschalten der Heizung (14) eine Abkühlzeit zu erfassen und bei unterschreiten eines Schwellenwerts eine Fehlermeldung zu erzeugen, die auf eine defekte Vakuumisolierung hinweist.

2. Heißgetränkezubereitungsvorrichtung nach Anspruch 1, bei dem zur Vakuumisolierung die Außenwand (11a, 11b) des Speichergefäßes zumindest bereichsweise doppelwandig ausgeführt und der doppelwandige Bereich der Außenwand einen evakuierten Raum (12) einschließt.

3. Heißgetränkezubereitungsvorrichtung nach Anspruch 1, bei dem zur Vakuumisolierung das Speichergefäß (11') in eine zumindest bereichsweise doppelwandige Außenhülle (20) eingesetzt ist, deren doppelwandiger Bereich (21a, 21b) einen evakuierten Raum (22) einschließt.

4. Heißgetränkezubereitungsvorrichtung nach Anspruch 2 oder 3, bei dem das doppelwandige Speichergefäß (20) oder die doppelwandige Außenhülle (11a, 11b) einen nicht vakuumisolierten Deckel (13, 23) aufweist, durch welchen elektrische und/oder hydraulische Anschlüsse (14a, 14b, 15, 16, 17) geführt sind.

5. Heißgetränkezubereitungsvorrichtung nach einem der vorangehenden Ansprüche, wobei das Speichergefäß (11, 11') als Druckgefäß ausgeführt ist, in welchem Heißwasser im Betrieb bei einer Temperatur von über 100°C gespeichert ist und der Heißwasserauslass mit einem Dosierventil (40) zur dosierten Kaltwasserbeimischung verbunden ist, um dem Heißwasser bei der Ausgabe Kaltwasser beizumischen, sodass ein Mischwasser mit einer Temperatur von unter 100°C zur Getränkezubereitung ausgegeben wird.

6. Heißgetränkezubereitungsvorrichtung nach Anspruch 5, bei der das Speichergefäß (11, 11') zur Speicherung von Heißwasser im Betrieb bei einer Temperatur von über 110°C, vorzugsweise in einem Bereich von 110°C bis 180°C, insbesondere im Bereich von 120°C bis 140°C ausgebildet ist.

7. Heißgetränkezubereitungsvorrichtung nach einem der Ansprüche 5 oder 6, bei dem das Dosierventil (40) zur Kaltwasserbeimischung als regelbares Ventil, insbesondere Proportionalventil ausgeführt ist und die Heißgetränkezubereitungsvorrichtung einen Temperaturfühler (44) zur Bestimmung der Mischwassertemperatur und ein Steuergerät zur Regelung der Mischwassertemperatur durch Ansteuerung des Dosierventils (40) aufweist.

8. Heißgetränkezubereitungsvorrichtung nach einem der Ansprüche 5 bis 7, bei dem zwischen dem Dosierventil (40) und dem Temperaturfühler (44) ein statischer Mischer, insbesondere Wendelmischer zur Mischung der Kalt- und Heißwasserströme angeordnet ist.

9. Heißgetränkezubereitungsvorrichtung nach einem der vorangehenden Ansprüche, bei dem die Heizung (14) als innerhalb des Speichergefäßes (11, 11') angeordnete Heizwendel ausgebildet ist.

10. Heißgetränkezubereitungsvorrichtung nach Anspruch 9, bei dem die Heizwendel innerhalb einer gewendelten Heizröhre (14) verläuft, welche vorzugsweise mit Magnesiumoxid-Pulver zur elektrischen Isolation der Heizwendel befüllt ist.

11. Heißgetränkezubereitungsvorrichtung nach einem der vorangehenden Ansprüche, mit einem ersten, zur Heißwassererzeugung und einen zweiten zur Dampferzeugung vorgesehenen Heißwasserboiler (10a, 10b), welche beide mit einer Vakuumisolierung (12, 22) versehen oder umgeben sind.

12. Heißgetränkezubereitungsvorrichtung nach Anspruch 2 oder 3, bei dem in den evakuierten Raum (12, 22) ein Getter-Material eingebracht ist.

13. Heißgetränkezubereitungsvorrichtung nach Anspruch 2 oder 3, bei dem in den evakuierten Raum (12, 22) eine Reflexionsfolie eingebracht ist.

## Claims

1. Hot beverage preparation device with at least one hot water boiler (10, 10a, 10b) for heating and storing hot water and/or hot steam for the preparation of hot beverages, wherein the hot water boiler (10, 10a, 10b) has a cold water inlet, a storage vessel (11, 11') with a heater (14) and a hot water and/or steam outlet, wherein the storage vessel (11, 11') is at least partially provided with or surrounded by a vacuum insulation (12, 22),
wherein
the hot beverage preparation device has a program-controlled control system which is connected to a temperature sensor (39, 69) arranged inside the hot water boiler (10, 10', 10a, 10b) for monitoring and/or regulating the hot water or steam temperature, **characterized in that**
the control system is configured, after the heating element (14) has been switched off, to detect a cooling period and, if a threshold value is not reached, to generate an error message that indicates a defective vacuum insulation.

2. Hot beverage preparation device according to claim 1, wherein for vacuum insulation the outer wall (11a, 11b) of the storage vessel is configured to be double-walled at least in some areas and the double-walled area of the outer wall encloses an evacuated space (12).

3. Hot beverage preparation device according to claim 1, wherein for vacuum insulation the storage vessel (11') is inserted into an outer shell (20) that is double-walled at least in some areas, the double-walled area (21a, 21b) of which encloses an evacuated space (22).

4. Hot beverage preparation device according to claim 2 or 3, wherein the double-walled storage vessel (20) or the double-walled outer shell (11a, 11b) has a non-vacuum-insulated lid (13, 23) through which electrical and/or hydraulic connections (14a, 14b, 15, 16, 17) are routed.

5. Hot beverage preparation device according to any one of the preceding claims, wherein the storage vessel (11, 11') is in the form of a pressure vessel in which hot water is stored at a temperature of above 100°C during operation, and the hot water outlet is connected to a metering valve (40) for the metered addition of cold water in order to add cold water to the hot water during dispensing, so that mixing water at a temperature of below 100°C is dispensed for beverage preparation.

6. Hot beverage preparation device according to claim 5, wherein the storage vessel (11, 11') for storing hot water during operation is configured for a temperature of over 110°C, preferably in a range of 110°C to 180°C, in particular in the range of 120°C to 140°C.

7. Hot beverage preparation device according to any one of claims 5 or 6, wherein the metering valve (40) for adding cold water is in the form of a controllable valve, in particular a proportional valve, and the hot beverage preparation device has a temperature sensor (44) for determining the mixing water temperature and a control device for regulating the mixing water temperature by controlling the metering valve (40).

8. Hot beverage preparation device according to any one of claims 5 to 7, wherein a static mixer, in particular a coil mixer, is arranged between the metering valve (40) and the temperature sensor (44) for mixing the cold and hot water flows.

9. Hot beverage preparation device according to any one of the preceding claims, wherein the heater (14) is in the form of a heating coil arranged inside the storage vessel (11, 11').

10. Hot beverage preparation device according to claim 9, wherein the heating coil extends inside a coiled heating pipe (14), which is preferably filled with magnesium oxide powder for the electrical insulation of the heating coil.

11. Hot beverage preparation device according to any one of the preceding claims, with a first hot water boiler (10a, 10b) for producing hot water and a second hot water boiler (10a, 10b) for producing steam, both of which are provided with or surrounded by vacuum insulation (12, 22).

12. Hot beverage preparation device according to claim 2 or 3, wherein a getter material is introduced into the evacuated space (12, 22).

13. Hot beverage preparation device according to claim 2 or 3, wherein a reflective foil is inserted into the evacuated space (12, 22).

## Revendications

1. Dispositif de préparation de boissons chaudes avec au moins un générateur d'eau chaude (10, 10a, 10b) pour le chauffage et le stockage d'eau chaude et/ou de vapeur chaude pour la préparation de boissons chaudes, dans lequel le générateur d'eau chaude (10, 10a, 10b) présente une arrivée d'eau froide, un récipient de stockage (11, 11') avec un élément de chauffage (14) et une sortie d'eau chaude et/ou de vapeur, dans lequel le récipient de stockage (11, 11') est pourvu ou entouré au moins partiellement d'une isolation par le vide (12, 22),
dans lequel
le dispositif de préparation de boissons chaudes présente un dispositif de commande configuré par programme qui est relié à un capteur de température (39, 69) agencé à l'intérieur du générateur d'eau chaude (10, 10', 10a, 10b) pour la surveillance et/ou la régulation de la température d'eau chaude ou de vapeur, **caractérisé en ce que**
le dispositif de commande est conçu afin de détecter un temps de refroidissement après l'arrêt de l'élément de chauffage (14) et de générer un message d'erreur qui indique une isolation par le vide défectueuse si une valeur seuil n'est pas atteinte.

2. Dispositif de préparation de boissons chaudes selon la revendication 1, pour lequel pour l'isolation par le vide, la paroi extérieure (11a, 11b) du récipient de stockage est réalisée au moins par endroits à double paroi, et la zone à double paroi de la paroi extérieure inclut un espace sous vide (12).

3. Dispositif de préparation de boissons chaudes selon la revendication 1, pour lequel pour l'isolation par le vide, le récipient de stockage (11') est inséré dans une enveloppe extérieure (20) au moins par endroits à double paroi, dont la zone à double paroi (21a, 21b) inclut un espace sous vide (22).

4. Dispositif de préparation de boissons chaudes selon la revendication 2 ou 3, pour lequel le récipient de stockage (20) à double paroi ou l'enveloppe extérieure (11a, 11b) à double paroi présente un couvercle (13, 23) non isolé par le vide, par lequel des raccords électriques et/ou hydrauliques (14a, 14b, 15, 16, 17) sont passés.

5. Dispositif de préparation de boissons chaudes selon l'une quelconque des revendications précédentes, dans lequel le récipient de stockage (11, 11') est réalisé comme récipient sous pression, dans lequel de l'eau chaude est stockée en fonctionnement à une température de plus de 100 °C, et la sortie d'eau chaude est reliée à une soupape de dosage (40) pour le mélange d'eau froide dosé afin de mélanger de l'eau froide à l'eau chaude lors de la distribution de sorte qu'une eau mélangée soit distribuée à une température de moins de 100 °C pour la préparation de boissons.

6. Dispositif de préparation de boissons chaudes selon la revendication 5, pour lequel le récipient de stockage (11, 11') est configuré pour le stockage d'eau chaude en fonctionnement à une température de plus de 110 °C, de préférence dans une plage allant de 110 °C à 180 °C, en particulier dans une plage allant de 120 °C à 140 °C.

7. Dispositif de préparation de boissons chaudes selon l'une quelconque des revendications 5 ou 6, pour lequel la soupape de dosage (40) est réalisée comme soupape régulable, en particulier soupape proportionnelle pour le mélange d'eau froide, et le dispositif de préparation de boissons chaudes présente un capteur de température (44) pour la détermination de la température d'eau mélangée et un appareil de commande pour la régulation de la température d'eau mélangée via la commande de la soupape de dosage (40).

8. Dispositif de préparation de boissons chaudes selon l'une quelconque des revendications 5 à 7, pour lequel un mélangeur statique, en particulier un mélangeur hélicoïdal pour le mélange des courants d'eau froide et chaude est agencé entre la soupape de dosage (40) et le capteur de température (44).

9. Dispositif de préparation de boissons chaudes selon l'une quelconque des revendications précédentes, pour lequel l'élément de chauffage (14) est configuré comme filament de chauffage agencé à l'intérieur du récipient de stockage (11, 11').

10. Dispositif de préparation de boissons chaudes selon la revendication 9, pour lequel le filament de chauffage s'étend à l'intérieur d'un tube de chauffage (14) spiralé qui est rempli de préférence de poudre d'oxyde de magnésium pour l'isolation électrique du filament de chauffage.

11. Dispositif de préparation de boissons chaudes selon l'une quelconque des revendications précédentes, avec un premier générateur d'eau chaude (10a, 10b) prévu pour la génération d'eau chaude et un second générateur d'eau chaude (10a, 10b) prévu pour la génération de vapeur qui sont tous deux pourvus ou entourés d'une isolation par le vide (12, 22).

12. Dispositif de préparation de boissons chaudes selon la revendication 2 ou 3, pour lequel un matériau getter est introduit dans l'espace sous vide (12, 22).

13. Dispositif de préparation de boissons chaudes selon la revendication 2 ou 3, pour lequel un film réfléchissant est introduit dans l'espace sous vide (12, 22).
